# EUROPEAN PATENT SPECIFICATION

(11) **EP 3 024 213 B1**
(45) Date of publication and mention of the grant of the patent: **28.10.2020**
(21) Application number: 15185364.5
(22) Date of filing: 15.09.2015
(51) Int. Cl.: H04N 1/00

(54) **IMAGE SCANNING APPARATUS AND METHOD FOR CONTROLLING THE SAME**
BILDABTASTVORRICHTUNG UND VERFAHREN ZUR STEUERUNG DAVON
APPAREIL DE BALAYAGE D'IMAGES ET SON PROCÉDÉ DE CONTRÔLE

(30) Priority: 20.11.2014 KR 20140162942
(43) Date of publication of application: 25.05.2016
(73) Proprietor: Hewlett-Packard Development Company, L.P., Spring, TX 77389 (US)
(72) Inventor: HAN, Dong-hyeop, Yongin-si, Gyeonggi-do (KR); OHK, Hyung-soo, Seoul (KR); PATANA, Elena Igorevna, Taganrog city 347916 (RU); PARK, In-ho, Suwon-si, Gyeonggi-do (KR); LEE, Ho-keun, Yongin-si, Gyeonggi-do (KR); KIM, Kyeong-man, Yongin-si, Gyeonggi-do (KR); OH, Hyun-soo, Suwon-si, Gyeonggi-do (KR); LEE, Chang-hyung, Seoul (KR); LEE, Eul-hwan, Seongnam-si, Gyeonggi-do (KR); CHUNG, Woo-jun, Suwon-si, Gyeonggi-do (KR)
(74) Representative: Appleyard Lees IP LLP

(56) References cited:
- EP-A1- 2 299 680
- EP-A2- 1 936 944
- EP-A2- 1 973 323
- EP-A2- 2 136 316
- WO-A1-2005/029392
- US-A1- 2008 253 647
- US-A1- 2012 050 807
- US-A1- 2014 218 761
- CASEY R G ET AL: "INTELLIGENT FORMS PROCESSING", IBM SYSTEMS JOURNAL, IBM CORP. ARMONK, NEW YORK, US, vol. 29, no. 3, 1 January 1990 (1990-01-01), pages 435-450, XP000265375, ISSN: 0018-8670

## Description

The present invention relates to an image scanning apparatus and a method for controlling the same. In particular, the present invention relates to an image scanning apparatus and a method for autonomously editing an image file stored in the image scanning apparatus.

An image scanning apparatus scans an original image such as a text, a picture, or a film and converts the original image into digital data. In this case, the digital data may be displayed on a monitor of a computer or printed as an output image by a printer. An example of the image scanning apparatus includes a scanner, a copier, a facsimile, or a multi function peripheral (MFP) for multiple embodying functions thereof via one apparatus.

A recent image scanning apparatus includes a storage, and stores a scan image generated via a scan operation or a fax image received via a fax operation. The scan image, the fax image, or the like may be stored as one file including a plurality of images on an operation basis.

However, a conventional image scanning apparatus does not support an edit function of an image file, and thus, when a user wants to edit a scan file stored in the image scanning apparatus, the user goes through the inconvenience of transmitting the scan file stored in the image scanning apparatus to a terminal apparatus, such as a personal computer (PC), with an edit function, editing the scan file using the terminal apparatus, and re-transmitting the edited scan file to the image scanning apparatus.

A recent image scanning apparatus is capable of classifying a scanned image using an optical character reader (OCR) function and performing different functions according the classification. For example, the image scanning apparatus may perform an operation of scanning and then printing a document with expression A written in a predetermined area and perform an operation of scanning a document with expression B written in a predetermined area and then transmitting the scan data to a server.

However, in order to user this function, a user needs to preset a type of accumulating documents. In detail, areas for positioning texts as identification references for respective types of documents are different, and thus, the user needs to set a document type or to set an area in which a text is positioned.

However, the user needs to manually preset a type of a document, and thus the user may set a different document type from the type of the accumulating documents or may not appropriately classify a plurality of types of mixed documents.

There is therefore a need for an image scanning apparatus, and a method for controlling the same, for autonomously editing an image file stored in the image scanning apparatus. There is also a need for an image scanning apparatus, and a method for controlling the same, for automatically classifying a scanned document.

In each of US-A-2012050807, EP-A-1973323, and US-A-2014218761, an image scanning apparatus is provided, comprising a scanner configured to scan a document to generate an image file including a plurality of pages; a storage configured to store an image file including the generated image file; a user interface unit configured to receive a selection of the stored image file and one or more edit commands and to display a plurality of thumbnail images corresponding, respectively, to the plurality of pages in the selected image file; and a controller, in response to any one of the displayed plurality of thumbnail images being selected for at least a predetermined time period, configured to edit the selected image file based on the one or more edit commands. A method for controlling an image scanning apparatus is also provided, comprising displaying, on the image scanning apparatus, in response to a received selection of an image file, a plurality of thumbnail images corresponding, respectively, to a plurality of pages included in the selected image file; editing, in response to any one of the displayed plurality of thumbnail images being selected for at least a predetermined time period, the selected image file, using the image scanning apparatus, based on one or more user input edit command; and storing the edited image file.

According to an aspect of the present invention, there is provided an image scanning apparatus as described above and a classifier configured to recognize a text contained in an area of the generated scan image and classify the scan image according to whether a predetermined keyword is present in the recognized text, wherein the classifier is configured to determine a degree of importance of each page of the plurality of pages together based on a keyword included in the specified page and the user interface unit is configured to display a degree of importance of each page of the plurality of pages together with the displayed plurality of thumbnail images, wherein the degree of importance of a page is based on one or more keywords on said page.

In embodiments, the image scanning apparatus includes a storage configured to store an image file, a user interface unit configured to receive selection of the image file stored in the storage and to display a thumbnail image corresponding to each of a plurality of pages contained in the selected image file, and a controller, in response to any one of the displayed thumbnail image being selected for a predetermined time period or more, to perform at least one of order change, delete, and partition of a page corresponding to the thumbnail image selected for the predetermined time period or more to edit the selected image file.

The controller, in response to any one of the thumbnail image being selected for a predetermined time period of more, may delete a page corresponding the thumbnail image selected for the predetermined time period or more from the selected image file.

The controller, in response to any one of the thumbnail image being selected for a predetermined time period of more, may partition pages after a page corresponding to the thumbnail image selected for the predetermined time period or more from the selected image file into separate image files.

The controller, in response to a command for moving any one of the thumbnail image to a different position, may vary an order of a page corresponding to the moved thumbnail image from the selected image file.

When a first thumbnail image is put on a second thumbnail image of the thumbnail image, the user interface unit may display the first thumbnail image and the second thumbnail image to overlap with each other in one region.

The controller, in response to a print command for the selected image file being input, may apply a print option n-up to pages corresponding to the first thumbnail image and the second thumbnail image and perform a print operation on the pages.

The user interface may receive a merging command for a first image file and a second image file, and the controller may merge the first image file and the second image file into one image file and stores the one image file in the storage.

The user interface may display a plurality of icons corresponding to a plurality of image files stored in the storage, and the controller, when a second icon of the plurality of icons is put on a first icon, may add a page in a second image file corresponding to the second icon to a first image file corresponding to the first icon and delete the second image file.

In embodiments, the scanner is configured to scan a document, including a table, to generate a scan image including the table; wherein the classifier is configured to classify the generated scan image for further processing; wherein the controller is configured to process the classified scan image using at least one of storage processing, transmission processing, and print processing, according to the classification result; wherein the classifier is further configured to extract table information including a number of columns for each row of the table included in the generated scan image and a number of rows for each column, and classify the generated scan image based on the extracted table information.

In embodiments, the image scanning apparatus includes a scanner configured to scan a document to generate a scan image, a classifier configured to classify the generated scan image, and a controller configured to process the generated scan image based on a classification result in the classifier using at least one of storage processing, transmission processing, and print processing, wherein the classifier extracts table information containing the number of columns for each row of a table contained in the document and the number of rows for each column and classifies the scan image based on the extracted table information.

The classifier may extract a horizontal boundary region and a vertical boundary region from the scan image, extract cell information based on the extracted horizontal boundary region and vertical boundary region, and extract the number of rows for each row and the number of rows for each column using the extracted cell information.

The classifier may classify the scan image according to a color map of a color image contained in the document.

The classifier may recognize a text contained in an entire region of the generated scan image and classify the scan image according to whether a predetermined keyword is present in the recognized text.

The classifier may extract a stamp from the generated scan image and classify the scan image according to the extracted stamp.

The classifier may extract a plurality of chroma regions from the generated scan image, generate a boundary region of each of the plurality of extracted chroma regions, and extract a stamp using the generated boundary region.

The user interface unit may be configured to receive selection of an OCR performing region for the generated scan image, wherein the controller may recognize a character with respect to the selected OCR performing region of the generated scan image, and reflect the recognized character to a file name or tag region of the scan image.

The scanner may scan a plurality of documents to generate a plurality of scan images, the classifier may extract a page number of a predetermined region of each of the plurality of scan images, and the controller may align the plurality of scan images according to an extracted number of each of the scan images to generate one image file.

According to another aspect of the present invention, there is provided a method for controlling an image scanning apparatus as described above, the method comprising storing a generated image file representing a scanned document including a plurality of pages, displaying, on the image scanning apparatus, in response to a received selection of the image file, a plurality of thumbnail images corresponding, respectively, to the plurality of pages included in the selected image file; editing, in response to any one of the displayed plurality of thumbnail images being selected for at least a predetermined time period, the selected image file, using the image scanning apparatus, based on one or more user input edit command; and storing the edited image file; characterized by recognising a text contained in an area of the generated scan image; classifying the scan image according to whether a predetermined keyword is present in the recognized text; determining a degree of importance of each page of the plurality of pages together based on a keyword included in the specified page; and displaying, on the image scanning apparatus, a degree of importance of each page of the plurality of pages together with the displayed plurality of thumbnail images.

In embodiments, the method includes, in response to selection of a pre-stored image file being received, displaying a thumbnail image corresponding to each of a plurality of pages contained in the selected image file, in response to any one of the displayed thumbnail image being selected for a predetermined time period or more, performing at least one of order change, delete, and partition of a page corresponding to the thumbnail image selected for the predetermined time period or more to edit the selected image file, and storing the edited image file.

In embodiments, the method further comprises scanning a document, including a table, to generate a scan image including the table; classifying the scan image for further processing; processing the classified scan image, using at least one of storage processing, transmission processing, and print processing, wherein the classifying comprises extracting table information including a number of columns for each row of the table included in the generated scan image and a number of rows for each column, and classifying the generated scan image based on the extracted table information.

In embodiments, the method includes scanning a document to generate a scan image, classifying the generated scan image, and processing the generated scan image based on a classification result using at least one of storage processing, transmission processing, and print processing, wherein the classifying includes extracting table information containing the number of columns for each row of a table contained in the document and the number of rows for each column and classifying the scan image based on the extracted table information.

A computer readable recording medium may include a program for execution of a method for controlling an image scanning apparatus, the method including in response to selection of a pre-stored image file being received, displaying a thumbnail image corresponding to each of a plurality of pages contained in the selected image file, in response to any one of the displayed thumbnail image being selected for a predetermined time period or more, performing at least one of order change, delete, and partition of a page corresponding to the thumbnail image selected for the predetermined time period or more to edit the selected image file, and storing the edited image file.

A computer readable recording medium may include a program for execution of a method for controlling an image scanning apparatus, the method including scanning a document to generate a scan image, classifying the generated scan image, and processing the generated scan image based on a classification result using at least one of storage processing, transmission processing, and print processing, wherein the classifying includes extracting table information containing the number of columns for each row of a table contained in the document and the number of rows for each column and classifying the scan image based on the extracted table information.

Additional and/or other aspects and advantages of the invention will be set forth in part in the description which follows and, in part, will be obvious from the description, or may be learned by practice of the invention.

The above and/or other aspects of the present invention will be more apparent by describing certain embodiments of the present invention with reference to the accompanying drawings, in which:
FIG. 1 is a diagram illustrating an image scanning apparatus; FIGS. 2, 3, 4, 5, 6, 7, 8, and 9 are diagrams illustrating examples of a user interface window to be displayed on a user interface unit of FIG. 1; FIG. 10 is a diagram for explanation of a function of a classifier of FIG. 1; FIGS. 11, 12, 13, 14, and 15 are diagrams for explanation of a method for classifying a table; FIG. 16 is a diagram for explanation of a method for classifying colors; FIG. 17 is a diagram for explanation of a method for classifying a stamp;
FIGS. 18 and 19 are diagrams for explanation of a method for setting a name of a generated image file;
FIG. 20 is a diagram for explanation of a method for aligning generated image files;
FIG. 21 is a diagram for explanation of a control method; and
FIG. 22 is another diagram for explanation of a control method.

Reference will now be made in detail to the embodiments, examples of which are illustrated in the accompanying drawings, wherein like reference numerals refer to the like elements throughout. The embodiments are described below to explain the present invention by referring to the figures.

The embodiments of the present invention may be diversely modified. Accordingly, specific embodiments are illustrated in the drawings and are described in detail in the detailed description.

However, it is to be understood that the present invention is not limited to a specific embodiment, but includes all modifications within the scope of the appending claims. Also, well-known functions or constructions are not described in detail since they would obscure the invention with unnecessary detail.

The terms "first", "second", etc. may be used to describe diverse components, but the components are not limited by the terms. The terms are only used to distinguish one component from the others.

The terms used herein are only used to describe the embodiments, but are not intended to limit the scope of the appending claims. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In an embodiment of the present invention, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, the present invention will be described in detail with reference to the accompanying drawings.

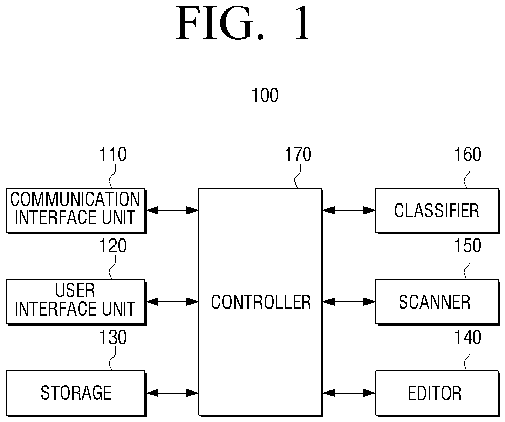

FIG. 1 is a diagram illustrating an image scanning apparatus 100 according to an embodiment of the present invention.

Referring to FIG. 1, the image scanning apparatus 100 according to an embodiment of the present invention may include a communication interface unit 110, a user interface unit 120, a storage 130, an editor 140, a scanner 150, a classifier 160, and a controller 170. The image scanning apparatus 100 may be a scanner, a copier, a facsimile, or a multi function peripheral (MFP) for multiple embodying functions thereof via one apparatus.

The communication interface unit 110 may be connected to a terminal apparatus (not shown) such as a personal computer (PC), a notebook PC, a personal digital assistant (PDA), a digital camera, and so on and may transmit a scan image (or an image file) scanned by the image scanning apparatus 100 to the terminal apparatus. In detail, the communication interface unit 110 may be formed to connect the image scanning apparatus 100 to an external apparatus and may be configured to connect the image scanning apparatus 100 to the terminal apparatus through a universal serial bus (USB) port or a wireless port (e.g., WIFI, Bluetooth, IEEE, ZigBee, 3rd generation (3G), 3rd generation partnership project (3GPP), long term evolution (LTE), etc.) as well as a local area network (LAN) and the Internet.

Here, the terminal apparatus may be various electronic apparatuses such as a smart phone, a portable multimedia player (PMP), an MP3 player, and so on, as well as an apparatus such as a PC.

In addition, the communication interface unit 110 may receive a scan command. In detail, the communication interface unit 110 may receive a scan command or a scanned image transmission command from the terminal apparatus. Here, the scan command may include a control command including scan processing, such as a copy command, a fax transmission command, a scan to server command, and a scan to mobile command, as well as a control including only scan processing.

In addition, the communication interface unit 110 may transmit an image file (e.g., a fax receiving file) stored in the storage 130 or a scan image generated via scan by the scanner 150 to the terminal apparatus. The communication interface unit 110 may transmit the image file stored in the storage 130 or the scan image generated via scan by the scanner 150 to a predetermined server (not shown).

Here, the scan image is generated by scanning a document by a scanner and the image file is generated by merging generated images on a job basis, such as PDF, TIFF, and JPG. Thus far, for ease of description, it is assumed that the image file includes a plurality of pages, that is, a plurality of scan images, but the image file may also include only one scan image.

The user interface unit 120 includes a plurality of functional keys for setting or selecting various functions supported by the image scanning apparatus 100 by a user and displays various information items provided by the image scanning apparatus 100. The user interface unit 120 may be embodied as an apparatus that simultaneously embodies input and output, such as a touchscreen, and may be embodied by combining a mouse and a monitor. When the user interface unit 120 is embodied as a touchscreen, the user interface unit 120 may also include a separate button for receiving selection of a specific function.

The user interface unit 120 receives a scan command from a user. In this case, the user interface unit 120 may receive a selection for whether a classification operation to be described later is performed. In addition, the user interface unit 120 may display a scanned image.

In addition, the user interface unit 120 may display an image file stored in the storage 130 to be described later. The user interface unit 120 may receive a selection of at least one of image files of the storage 130 to be described later and receive an edit command for the selected image file.

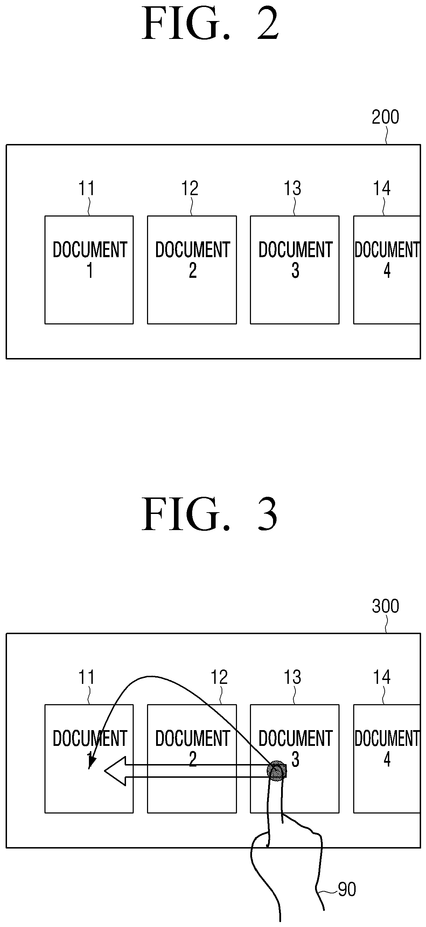

The edit command may be merging of image files, partitioning of an image file, changing in page in an image file, and deleting of a specific page in an image file. The edit command may be input via a touch manner. A detailed example of the edit command using a touch method will be described below with reference to FIGS. 2 to 6.

The user interface unit 120 may receive selection of at least one of image files stored in the storage 130 described later and receive a preview display command (or a preview command) of the selected image file. The preview display command may be performed when a user touches an icon corresponding to the image file. Here, the icon may have a predetermined shape indicating a file name corresponding to the image file or may be a thumbnail image indicating a representative page in the image file.

In response to the preview display command being received, the user interface unit 120 may display the thumbnail image (or a preview image) corresponding to a page contained in the selected image file. In this case, the user interface unit 120 may display a plurality of thumbnail images on one image. When pages contained in the image file are not capable of being displayed on one image, the user interface unit 120 may also display a scroll area to display a thumbnail image of a page other than the currently displayed thumbnail image.

The user interface unit 120 may also display importance degrees of respective thumbnail images. The importance degrees may be displayed in the form of a predetermined icon or figure at one side adjacent to the corresponding thumbnail. For example, receptive icons corresponding to pages may be displayed or a specific icon may be displayed only for a page corresponding to specific importance. In addition, the importance degree may be previously and manually set by a user with respect to a specific page or may be automatically extracted based on a keyword included in the specific page. For example, a page containing a keyword such as "confidential", "secret", and "important" may be automatically recognized as a page with high importance.

In an embodiment of the present invention, importance degrees are displayed together only for respective thumbnail images, but in some embodiments, the user interface unit 120 may also display importance degrees corresponding to respective image files in an operation for displaying the image file stored in the storage 130.

The user interface unit 120 may receive an edit command for each page in the selected image file. Here, the edit command for each page may include deletion of a specific page, change in page order, and partition into two pages.

In addition, the edit command may be input in a touch manner. For example, any one of thumbnail images may be selected for a predetermined time period or more to receive a page deleting command for deleting a page corresponding to the thumbnail image selected for a predetermined time period or more from the selected image file. Alternatively, any one of thumbnail images may be selected for a predetermined time period or more to receive a page partition command for partitioning pages after a page corresponding to the thumbnail image selected for a predetermined time period or more into separate image files. Alternatively, a page order changing command for changing page order corresponding to a moved thumbnail image in a selected image file may be received via a user touch for moving any one of thumbnail images to another position.

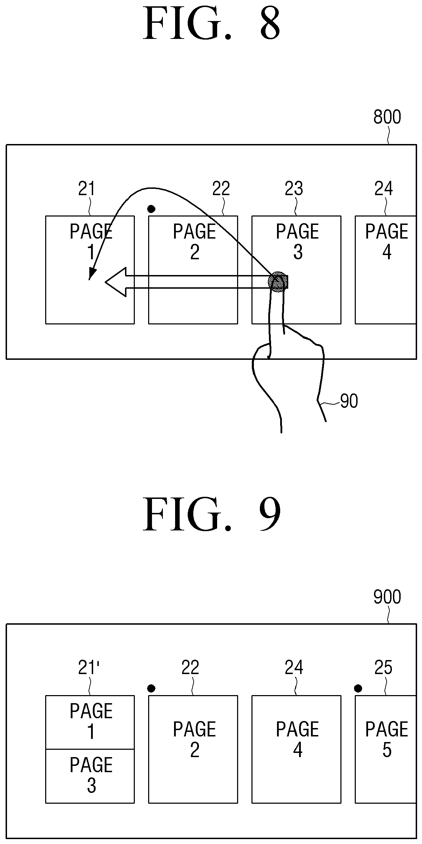

In addition, the user interface unit 120 may change a method for displaying a thumbnail image. In detail, the user interface unit 120 may display a first thumbnail image and a second thumbnail image to overlap on one area when the first thumbnail image of the thumbnail image is put on the second thumbnail image. As such, when a plurality of thumbnail images overlap, if a print command for a corresponding image file is input, the overlapping pages in the image file may be n-up printed, which will be described later with reference to FIGS. 8 and 9. Here, n-up refers to a print option for reducing and printing a plurality of pages (or a plurality of images) on one printing paper sheet. Thus far, although the case in which n-up is applied in response to only a print command has been described, n-up may also be applied when a user inputs a command for generating an e-book with respect to the corresponding image file.

The user interface unit 120 may receive a file name and/or a tag for the generated scan image. In detail, the user interface unit 120 may directly receive an input text via a file name or a tag or may receive a specific area of a scan image corresponding to the corresponding text. For example, when a user sets an upper area of a specific text while a thumbnail image of a specific page is displayed, a file name may be set using a text for the corresponding area or the corresponding text may be input as a tag.

The storage 130 may store a program for configuring various images to be displayed on the aforementioned interface unit and an operating system (OS) and an application program for an operation of the image scanning apparatus 100. Here, the OS is a component for controlling and managing an overall operation of hardware.

The storage 130 stores an image file. In detail, the storage 130 may store a scan image generated by the scanner 150 to be described later or store an image file generated by merging scan images on a job basis. In addition, the storage 130 may store an image file edited by the editor 140 that will be described later or update or delete a pre-stored image file according to the edit result of the editor 140.

The storage 130 may be embodied as a storage medium in the image scanning apparatus 100 (e.g., a flash memory, a hard disk drive (HDD), or a solid state drive (SSD)) and an external storage medium, for example, a removable disk including a USB memory, a storage medium connected to a host, a web server through a network, and so on.

The editor 140 edits an image file selected according to the input edit command. The editor 140 may be embodied as a digital signal processor (DSP), a graphic processing circuit, or the like. In detail, the editor 140 may edit an image file pre-stored in the storage 130 according to the edit command input through the user interface unit 120.

For example, when an edit command of a user is merging of two image files (in detail, when the user touches a first image file and puts the touched first image file on a second image file), the editor 140 may add all pages (or scan images) in the first image file to the second image file. In addition, the editor 140 may store the second image file with added pages in the storage 130 and delete the first image file stored in the storage 130.

When an edit command of a user is deleting of a specific page in an image file (in detail, when a specific thumbnail image is touched for a predetermined time period or more on a preview image of the first image file), the editor 140 may remove the page touched for a predetermined time period or more by the user in the first image file.

When an edit command of a user is to partition an image file (in detail, when a specific thumbnail image is touched for a predetermined time period or more on a preview image of the first image file), the editor 140 may delete pages after the page touched by the user for a predetermined time period or more in the first image file and generate the deleted pages as a separate image file.

Thus far, although the case in which partition of an image file and deleting of a specific page in an image file are performed via the same touch command has been described, in some embodiments, the two commands may be differentiated by varying a predetermined time period. Alternatively, when a touch command is input using a predetermined time period, an operation is to be performed from the operations corresponding to the two commands may be additionally selected by the user. Alternatively, in the case of a partition command, when a touch command received for a predetermined time or more and a scroll touch command to the right are combined, the partition command may be executed.

The scanner 150 may scan a document to generate a scan image. In detail, the scanner 150 includes a light emitter (not shown) for emitting light to the document, a lens portion for forming an image corresponding to light reflected off the document on an internal image sensor, an image sensor, and so on, and reads image information of the document from the light for forming the image on the image sensor.

The scanner 150 may be an apparatus for scanning the document put on a flatbed or an apparatus for scanning one or both surfaces of the document fed by an automatic document feeder (ADF), or an apparatus formed by combining the two apparatuses. The scanner 150 may generate a plurality of scan images that are continuously scanned by the ADF as one file.

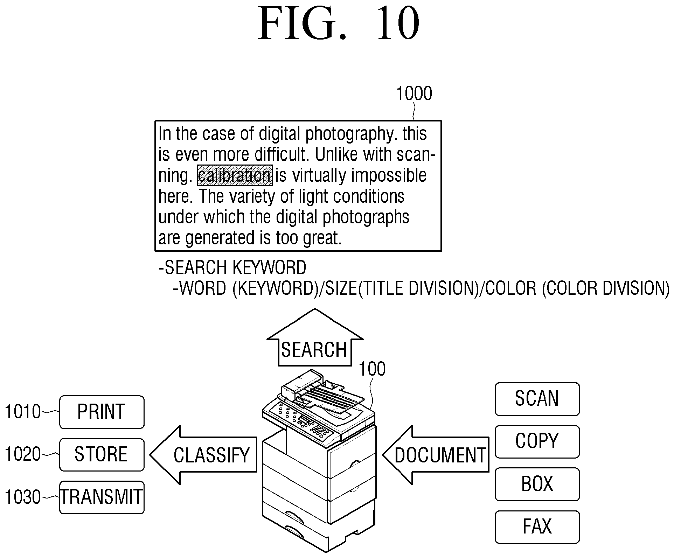

The classifier 160 classifies the generated scan image. In detail, the classifier 160 may recognize a text contained in an area of the generated scan image and classify the scan image according to whether a predetermined keyword is present in the recognized text. Such a classification method will be described below with reference to FIG. 10.

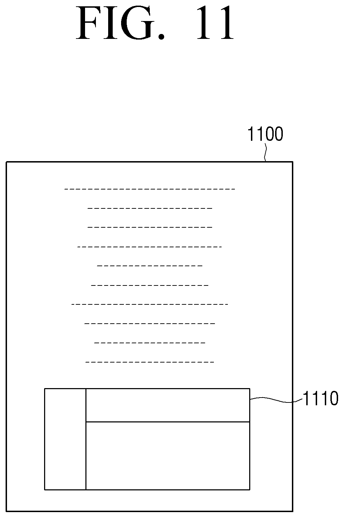

In addition, when the generated scan image contains a table, the classifier 160 may classify a document format of the generated scan image based on a form of the table. In detail, the classifier 160 may extract table information containing the number of columns for each row and the number of rows for each column of the table contained in the document and may classify the scan image based on the extracted table information. A detailed operation of the table classifying method will be described with reference to FIGS. 11 to 15.

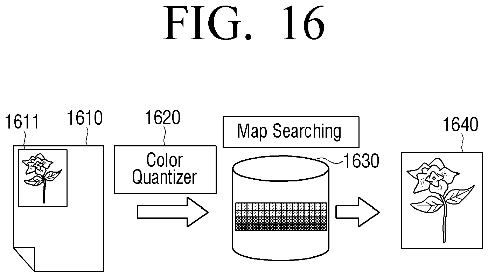

In addition, the classifier 160 may classify the scan image according to a color map of a color image contained in the document. In detail, when the document contains the color image, the classifier 160 may classify the scan image by performing color quantization on the color image and comparing the color map as the quantization map and a color map for each pre-stored analysis reference. Such a classification method will be described below with reference to FIG. 16.

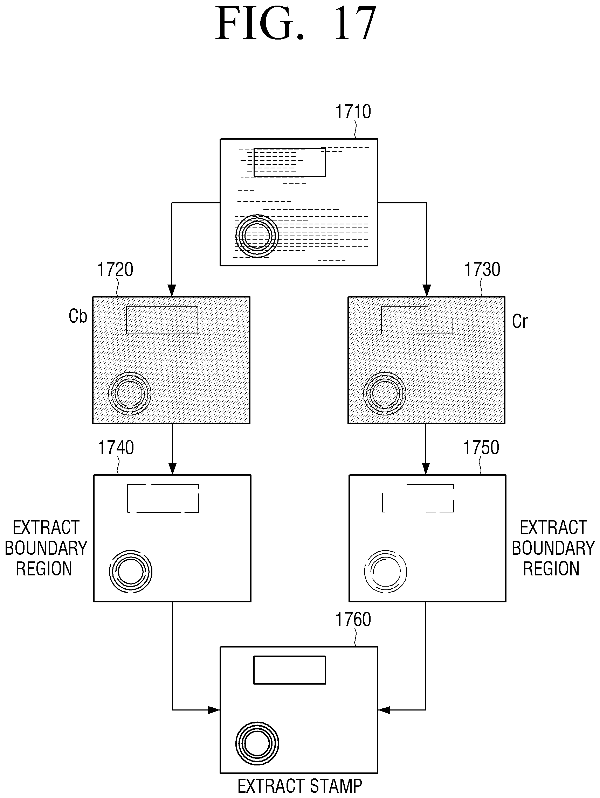

In addition, the classifier 160 may extract a stamp from the generated scan image and classify the scan image according to the extracted stamp. In detail, the classifier 160 may extract a plurality of chroma regions from the generated scan image, generate boundary regions with respect to the plurality of extracted chroma regions, and extract a stamp using the generated boundary regions. Such a classification method will be described below with reference to FIG. 17.

The classifier 160 may perform classification using only any one of the aforementioned classifying methods, but classification may be performed using a method obtained by combining the plurality of methods. For example, when a document contains a table, the classifier 160 may classify the format (e.g., taxation report and contract) of the document according to type of the table and perform secondary classification according to an optical character reader (OCR) result of a region corresponding to each format. Here, the OCR is a function of extracting various characters such as a text from a scan image as a type of bitmap image.

In addition, the classifier 160 may recognize a page number in the scan image generated by the aforementioned scanner 150 and align the generated scan image according to the recognition result.

The controller 170 controls each component in the image scanning apparatus 100. In detail, the controller 170 controls an overall operation of the image scanning apparatus 100 using various programs stored in the storage 130. For example, the controller 170 may include a central processing unit (CPU), a random access memory (RAM), a read only memory (ROM), and a system bus. In some embodiments, the controller 170 may also perform the aforementioned functions of the editor 140 and/or the classifier 160, and in this case, the aforementioned editor 140 and/or classifier 160 may be embodied as a graphic signal processor (DSP) in the controller 170.

In addition, in response to a scan command being received from the user interface unit 120 or the communication interface unit 110, the controller 170 may control the scanner 150 to perform a scan operation. The controller 170 may process the scan image generated by the scanner 150 in response to a control command of a user.

For example, when the scan command of the user originates from a document copying command, the controller 170 may print the scan image generated by the scanner 150. Alternatively, when the scan command of the user originates from a command for transmitting the scan image to other apparatuses, such as a scan to server command, a scan to mobile command, and a scan to DLNA command, the controller 170 may control the communication interface unit 110 to transmit the scan image generated by the scanner 150 to other devices selected by the user.

In addition, in response to a display command of pre-stored image files being received, the controller 170 may control the user interface unit 120 to display a list of the image files pre-stored in the storage 130. In addition, in response to a thumbnail display command of any one of the image files being received through the user interface unit 120, the controller 170 may control the user interface unit 120 to display thumbnail images for respective pages in an image file selected by the user.

In this case, when thumbnail images are present for the respective pages in the file selected by the user, the controller 170 may display the corresponding thumbnail image. When thumbnail images are not present for the respective pages, the controller 170 may generate the thumbnail image for the respective pages and control the user interface unit 120 to display the generated thumbnail images. In addition, in order to use the thumbnail image in the future, the controller 170 may add the generated thumbnail image to the image file.

In addition, in response to an edit command being received through the user interface unit 120, the controller 170 may control the editor 140 to edit the selected image file according to the edit command. In detail, the controller 170 may recognize the edit command based on a user touch manipulation on a touchscreen and control the editor 140 to perform edit based on the recognized edit command.

For example, in response to a touch gesture of selecting one first image file and putting the corresponding first image file on another second image file being received, the controller 170 may determine that an edit command for merging the first image file and the second image file is input.

In addition, while a thumbnail image for the first image file is displayed, if one page is selected for a predetermined time period or more, the controller 170 may determine that a removal command for removing the page selected for a predetermined time period or more from the corresponding first image file is input.

In addition, while a thumbnail image for the first image file is displayed, in response to a touch gesture of putting one page on another page being received, the controller 170 may set n-up as a print option for two overlapping pages. Accordingly, in response to a print command for an image file that is currently preview-displayed being input, the controller 170 may print the image file that is currently preview-displayed and the two overlapping pages to which n-up is applied are printed. For example, when a user overlaps two pages, the two overlapping pages may be output on one paper sheet. When the user overlaps four pages as one, the four overlapping pages may be output on one paper sheet.

In addition, the controller 170 may control the classifier 160 to classify the generated scan image and may perform additional processing methods such as storage, transmission, and printing on the generated scan image according to the classification result.

For example, when a storage processing method is predetermined for a document type A (e.g., resumes), a printing processing method is predetermined for a document type B (e.g., contract), and a transmission processing method to a server is predetermined for a document type C, the controller 170 may control the classifier 160 to classify a document type according to a table contained in the generated scan image, and when a first scan image is a resume according to the classification result, the controller 170 may store the first scan image in the storage 130. In addition, when a second scan image is determined as a report, the controller 170 may control the communication interface unit 110 to transmit the scan image to a pre-registered server.

Although the case in which a document is completely classified according to a first classification method has been described thus far, in some embodiments, a document may be classified according to a plurality of classification methods. For example, first classification (resume, contract, or report) may be performed according to a type of a table contained in the document, and second classification (in the case of resume, the resume may be classified as resume for sales department, resume for planning department, and so on via OCR of an area corresponding to an applied field) via OCR of an area corresponding to each classification basis according to the first classification result.

In response to a scan image for a plurality of documents being generated, the controller 170 may recognize a page number via OCR of a region (a lower central portion of the document, a lower right portion of the document, etc.) in which the page number is mainly positioned and accordingly may align scan images to generate an image file.

As described above, the image scanning apparatus 100 according to an embodiment of the present invention may autonomously edit an image file, thereby enhancing user convenience. The image scanning apparatus 100 according to an embodiment of the present invention may classify a document using various methods and other various operations may be performed according to the classification, thereby enhancing user convenience. In addition, for this classification, a user may determine a document type as a target of document classification without setting the type of the document by a user, thereby further enhancing user convenience.

In the description of FIG. 1, the case in which the editor 140, the classifier 160, and the controller 170 are embodied as separate components has been described, but functions of the aforementioned components may be embodied as one component. For example, a function of the editor 140 and a function of the classifier 160 may be embodied via a graphic processor or a DSP, and functions of 'the editor 140 and the controller 170', functions of 'the classifier 160 and the controller 170' or functions of the three components may be embodied as one processor or SoC.

Hereinafter, the term "touch input" refers to a touch gesture or the like, which is performed on a display and a cover in order to control a user apparatus. In addition, the term "touch input" may include a state in which an object is spaced apart from a display with a predetermined distance or more without contact with the display (e.g., floating or hovering). The touch input may include, but is not limited to, a touch and hold gesture, a tap gesture of releasing after touch, a double tap gesture, a panning gesture, a flick gesture, a touch drag gesture of moving in one direction after touch, a pinch gesture, and so on.

FIGS. 2 to 9 are diagrams illustrating examples of a user interface window to be displayed on a user interface unit of FIG. 1.

In detail, FIG. 2 is a diagram illustrating a user interface window 200 for displaying a plurality of image files stored in the storage 130.

Referring to FIG. 2, the user interface window 200 displays icons 11, 12, 13, and 14 corresponding to a plurality of image files. For ease of description, although icons corresponding to four image files are displayed, more image files may be present in the storage 130 in some embodiments. In these cases, the user interface window 200 may further include a scroll area for displaying an icon corresponding to another non-displayed image file.

In the illustrated example, although an icon is a square box with a document name, in some embodiments, the icon may be indicated as a main thumbnail image (e.g., a first page thumbnail) of a corresponding image file. In addition, the icon may display information about a page number included in the corresponding image file.

A user may easily check the image file stored in the storage 130 through the user interface window 200.

When a first image file 11 and a third image file 13 are unintentionally separated and stored into two files due to document loading space deficiency while scanning a plurality of document corresponding to one operation, the user may wish to merge the first image file 11 and the third image file 13 to one file.

Conventionally, the two image files 11 and 13 are transmitted to a terminal apparatus, and the terminal apparatus drives an application program for merging two image files to merge the two image files 11 and 13 and transmits the merged image file back to the image scanning apparatus 100.

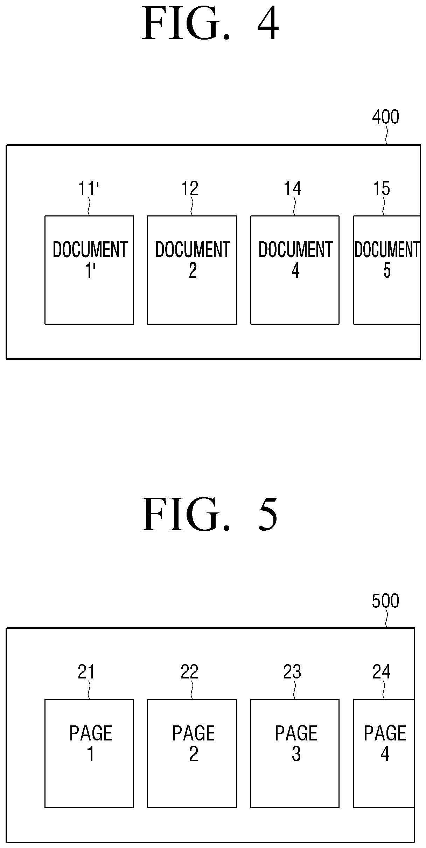

However, the image scanning apparatus 100 according to an embodiment of the present invention may autonomously perform a merging operation. Hereinafter, with reference to FIGS. 3 and 4, input of a control command for merging two image files and the result thereof will be described.

FIG. 3 is a diagram illustrating an example of a user interface window 300 for inputting a control command for imaging two image files.

Referring to FIG. 3, the user interface window 300 displays the icons 11, 12, 13, and 14 corresponding to a plurality of image files.

As described above, when the two image files 11 and 13 need to be merged, a user 90 may make a touch gesture of selecting the third image file 13 to be merged via touch and putting the selected third image file 13 on the first image file 11 via touch.

In response to the gesture being input, the controller 170 may determine the corresponding gesture as a merging command for merging the third image file 13 with the first image file 11 and add pages of the third image file 13 to the first image file 11. In addition, the controller 170 may delete the third image file 13. Accordingly, the user interface window 300 may be changed as illustrated in FIG. 4.

FIG. 4 is a diagram illustrating an example of a user interface window 400 when two image files are merged.

Referring to FIG. 4, the user interface window 400 displays icons 11', 12,14, and 15 corresponding to a plurality of image files. Comparing FIG. 2 and FIG. 4, it is seen that an icon corresponding to the third image file 13 is deleted via a merging operation.

Pages of the third image file 13 may be disposed behind the first image file 11. For example, when the first image file 11 includes ten pages and the third image file 13 includes five pages, the merged first image file 11' may include fifteen pages such that pages one to ten correspond to ten existing pages of the first image file 11 and pages eleven to fifteen correspond to five existing pages of the third image file 13.

Although the case in which two image files are merged immediately in response to a merging command of a user has been described thus far, in some embodiments, merging may be performed according to an additional checking command of a user and an operation for receiving selection of an arrangement order of pages of two image files from the user may be added.

Although the case in which two image files are merged in response to a drag drop touch gesture of a user for a specific image file has been described thus far, in some embodiments, a touch gesture may be used as a command for applying attribute information of a specific image file to another image file.

In addition, although the case in which image file are merged has been described thus far, the aforementioned icon may be an icon corresponding to a folder for storing a plurality of image files, and when the aforementioned drag drop touch gesture is detected for the icon corresponding to the plurality of folders, the two folders may be merged into one folder.

FIG. 5 is a diagram illustrating a preview of an image file selected by a user.

Referring to FIG. 5, a user interface window 500 displays thumbnail images 21, 22, 23, and 24 of respective pages included in the selected image file. For ease of description, although the case in which only four pages are contained in the corresponding image file is illustrated, the image file may include only one page or five or more pages. When the image file includes a predetermined number of pages or more, the user interface window 500 may further include a scroll area for displaying a thumbnail image corresponding to a page that is not currently displayed
In the illustrated example, the thumbnail images are displayed for the respective pages, but when resolution of a display included in the image scanning apparatus 100 is not high, only an icon corresponding to a page number is displayed, and then only when the user selects an icon corresponding to a specific page, may a thumbnail image corresponding to the corresponding page be displayed.

The user may easily check a configuration of an image file through the user interface window 300.

When documents of two different jobs are scanned in one go to generate one image file, the user may want to partition a specific image file into two files. Alternatively, when an unintended document is scanned together during a scan operation, the user may want to delete the specific page from the specific image file.

Conventionally, the corresponding image file is transmitted to a terminal apparatus, and the terminal apparatus drives an application program for partitioning two image files or deleting a specific page to perform edit and transmits the edited image file back to the image scanning apparatus 100.

However, the image scanning apparatus 100 according to an embodiment of the present invention may autonomously perform the partition operation and the page deleting operation.

For example, when a specific page needs to be deleted from one image file, the user may touch the specific page to be deleted for a predetermined time period or more.

In response to a touch gesture being input, the controller 170 may determine the corresponding gesture as a delete command for deleting the specific page from the corresponding image file and delete the corresponding page from the corresponding image file.

In addition, when one document page needs to be partitioned into two image files, the user may touch a page as a partition reference for a predetermined time period or more. In addition, the user may make a gesture of scrolling a touched area to the right after predetermined touch.

In response to the touch gesture being input, the controller 170 may determine the corresponding gesture as a partition command for partitioning the corresponding image file based on a page to which touch is input for a predetermined time period or more, delete pages after the page touched for a predetermined time period or more from the corresponding image file, and generate the deleted pages as a separate image file.

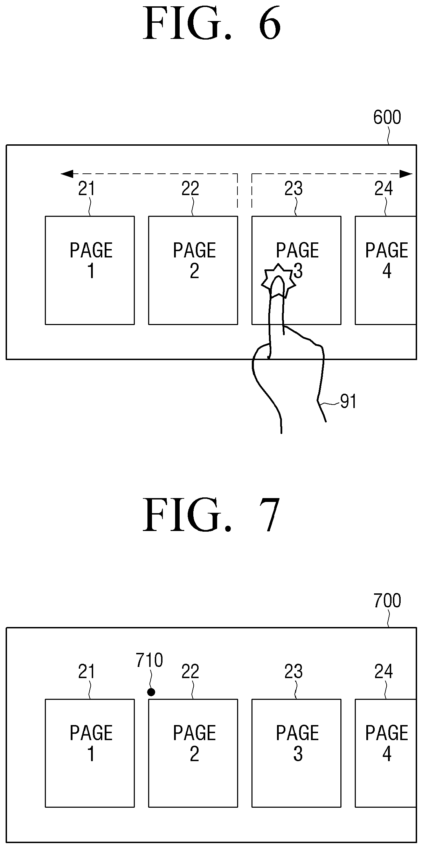

FIGS. 6 to 9 are diagrams illustrating another example of a preview of an image file selected by a user.

Referring to FIGS. 6 to 9, a user interface window 600, 700, 800, and 900 displays the thumbnail images 21, 22, 23, and 24 of respective pages included in the selected image file. In addition, a user interface window 700 displays an identification mark 710 indicating a page with high importance with respect to an important page.

A user 91 may easily recognize importance of each page contained in an image file through the user interface window 600.

When a preview is displayed before a user prints the corresponding image file, the user may recognize that a first page and a third page are less important than a second page. In this case, a user 90 may consider that it is desirable that the two less important pages are printed with a small size and input a gesture command for putting the third page on the first page, as illustrated in FIG. 8. In response to the gesture command, the user interface window 600 may be changed as illustrated in FIG. 9.

While this image is displayed, if the user inputs a print command for a corresponding file, the image scanning apparatus 100 may print the first page and the third page to which n-up is applied and may print another page without n-up processing. For example, when a print command for an image file with five pages is input as illustrated in FIG. 9, the first page and the third page in the image file may be printed as a first page 21', the second page may be printed as a second page 22, and a fourth page may be output as a third page 24. In addition, a fifth page may be output as a fourth page 25.

In the illustrated example, although two pages are displayed to overlap in response to a user touch gesture, in some embodiments, even if there is no user selection, a page with low importance may automatically overlap with another adjacent page. In addition, in the illustrated example, although two pages overlap with each other, in some embodiments, four pages may overlap with each other. The number of overlapping pages may correspond to n-up supported by the image scanning apparatus 100. For example, when the image scanning apparatus 100 supports 2-up, 4-up, and 6-up, 2 to 6 pages may overlap with each other.

In the illustrated in example, although a plurality of pages in an image file are displayed in a page order, in some embodiments, a page with high priority may be displayed before a page with low priority.

In the description of FIGS. 2 to 9, although the case in which a user control command is input via a touch manner has been described, in some embodiments, the aforementioned control commands may be input through button input, voice input, and so on.

FIG. 10 is a diagram for explanation of a function of a classifier of FIG. 1.

Referring to FIG. 10, the image scanning apparatus 100 may perform various operations such as scan, fax, and copy and store image data 1000 that is used or generated during the operations. An OCR operation may be performed on the image data, and when a predetermined keyword is present in an OCR processed document, a specific function corresponding to the keyword may be performed.

For example, a human resource department may process a received resume in different ways according to specialty. In detail, because an applicant from business management is to be interviewed by a head office, a corresponding resume needs to be transferred to the head office; because an applicant from computer engineering is to be interviewed today, a corresponding resume needs to be copied to two copies to be provided to two interviewers; because an applicant from electronic engineering is to be interviewed tomorrow, a corresponding resume needs to be stored to be used tomorrow.

Conventionally, workers of the human resource department needs to classify resumes according to an applicant's background, transmit a resume classified as business management to a head office via a scan to e-mail or fax transmission operation, copy a resume classified as computer engineering into two copies, and perform a scan to server operation on a resume classified as electronic engineering.

However, the image scanning apparatus 100 according to an embodiment of the present invention may autonomously perform a classification operation. Accordingly, a user may preferentially register three keywords and execute commands for the respective keywords. For example, a scan to e-mail command may be registered for a keyword of "business management", a copy command may be registered for a keyword of "computer", and a scan to server command may be registered for a keyword of "electronic". Then when the received resume is put on a loading portion and a scan command is input, the image scanning apparatus 100 may sequentially scan a plurality of resumes and may detect whether a keyword of "business management", "computer", or "electronic" is present in the generated scan image.

The image scanning apparatus 100 may perform a function corresponding to the detected keyword. For example, the image scanning apparatus 100 may perform an e-mail transmission function on a scan image with a keyword of "business management", perform a 2-copy copy function on a scan image with a keyword of "computer", and perform a server storage function on a scan image with a keyword of "electronic". The aforementioned keyword detection and a function corresponding to a keyword may be performed together with a scan operation of a plurality of documents. For example, when a keyword detection operation is performed after a scan operation of a first document, a scan operation of a second document may be performed together. In addition, when any one of functions of e-mail transmission, copy, or storage of the first document is performed, keyword detection of the second document and a scan operation of the third document may be performed together.

In some embodiments, the functions may be performed on an operation basis according to user settings. That is, when all scan images of documents are generated, keyword detection may be performed on the all scan images, an e-mail transmission function may be simultaneously performed on documents with a keyword of "business management", a copy function may be performed on documents with a keyword of "computer", and a server storage function may be performed on documents with a keyword of "electronic".

Although the case in which different functions are additionally performed according to a detected keyword has been described thus far, additional functions may be performed under different conditions according to a detected keyword.

For example, a hospital in charge of various medical departments may be provided with a medical record document from a different hospital. In this case, the hospital may check a disease name in the medical record document and classify the document according to the disease name. In addition, the hospital scans the corresponding medical record document and transmits the document to a separate server for each medical department.

In this case, when the image scanning apparatus 100 stores a disease name corresponding to each medical department as a keyword, the image scanning apparatus 100 may detect a preregistered disease name from the scanned medical record document and transmit a corresponding scanned image file to a storage server corresponding to a medical department corresponding to the detected disease name. For example, when a medical record document with a disease name of "dental caries" is scanned, a corresponding scanned image file may be transmitted to a dental server of a dental clinic corresponding to dental caries. In addition, this may be applied to suit related documents as well as medical record documents.

Although the case in which documents are classified based on a plurality of distinguishable keywords has been described thus far, in some embodiments, documents may be classified according to whether a specific keyword is present. For example, when personal information needs to be protected, copy may be performed on a document with a keyword of an ID card number without server storage, and copy along with server storage may be performed on a document with a keyword of "ID card number".

Although the case in which whether a specific keyword is present in all areas of a document is determined has been described thus far, in some embodiments, whether a keyword is present in some areas of the document may be determined to rapidly perform a keyword detection operation.

The aforementioned keyword may be positioned at different positions according to a document type. Thus, an image scanning apparatus needs to preferentially know an area on which OCR is to be performed for each document type. For example, in the case of a resume with a specific region filled with specialty, the image scanning apparatus may not perform character recognition on all documents and may extract a desired keyword via character recognition with respect to only an area filled with specialty. In addition, in the case of a medical record document with a specific area filled with a disease name, the image scanning apparatus may not perform character recognition on all documents and may extract a desired keyword via character recognition with respect to only an area filled with a disease name.

However, the area may be varied according to a document type. Accordingly, conventionally, types of currently loaded documents need to be set by a user prior to document classification.

However, an image scanning apparatus may simultaneously scan two documents in a hospital using both the aforementioned resume and medical record document, and in this case, it is difficult to change settings every time according to documents.

Accordingly, in order to overcome this problem, according to an embodiment of the present invention, document types may be preferentially classified using another document classifying method prior to a classification operation using OCR recognition.

First, documents that are officially used, such as a resume and a medical record document may contain a table. Accordingly, a document type may be preferentially classified according to a type of the table contained in the document. An example of this case will be described with reference to FIGS. 11 to 15.

Second, a document of a company or a public office may contain a specific color image. For example, in the case of a public office, forms may have different colors, and a company may use a paper sheet with a colorful company logo printed. Accordingly, a document type may be differentiated using color information contained in the document. An example thereof will be described below with reference to FIG. 16.

Third, a public office may use a stamp indicating approval or certification for a document. Accordingly, a document type may be differentiated using the stamp contained in the document. An example thereof will be described below with reference to FIG. 17.

FIGS. 11 to 15 are diagrams for explanation of a method for classifying a table according to an embodiment of the present invention.

As described above, the same type of documents may have the same type of tables. For example, a taxation report may have a standard type of table and a withhold income receipt may also have a standard type of table.

Accordingly, document types may be differentiated through a table type. As such, in the present invention, table information containing the number of columns for each row contained in a document and the number of rows for each column may be extracted and classification may be performed using the table information.

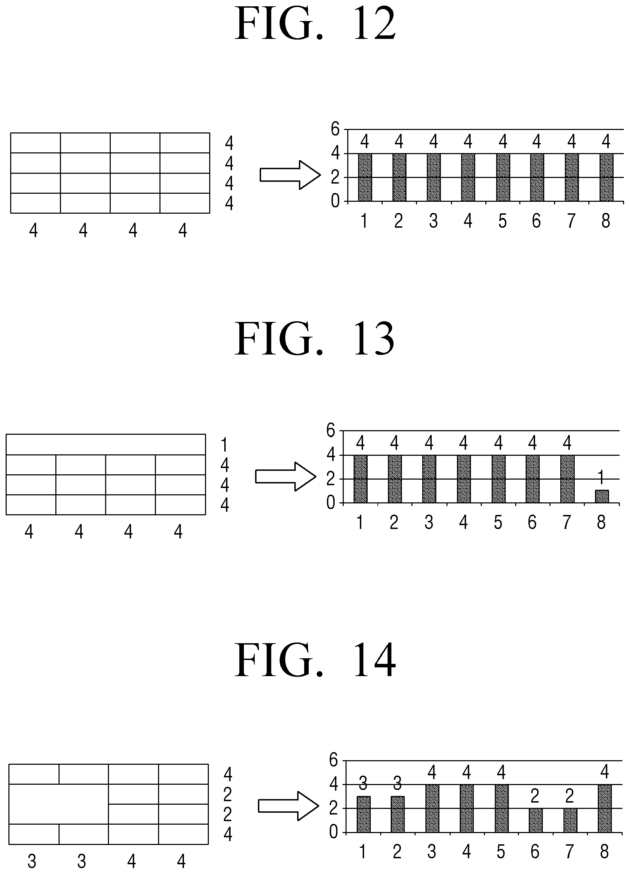

For example, FIGS. 12 to 14 illustrate three examples of tables with similar sizes.

Referring to FIG. 12, a corresponding table is a general table of four columns and four rows. When table information is extracted with respect to the table, the number of columns for each row and the number of columns for each column are four and have table information of [4, 4, 4, 4, 4, 4, 4, 4].

Referring to FIG. 13, a corresponding table is formed by merging a general table of four columns and four rows with a first row. When table information is extracted from the table, the number of columns for each row has values of [4, 4, 4, 4] from the left and the number of rows for each column has values [4, 4, 4, 1] from the bottom. Accordingly, the corresponding table has table information of [4, 4, 4, 4, 4, 4, 4, 1]. Thus far, when the number of rows for each column is reflected, a value is read from the left, and when the number of rows for each column is reflected, a value is read from the bottom, but various reflecting methods may be applied.

Referring to FIG. 14, a corresponding table is formed by merging a general table of four rows and four columns with row 2 column 1, row 2 column 2, row 3 column 1, and row 4 column 1 into one table. When table information is extracted from the table, the number of columns for each row has [3, 3, 4, 4] from the left and the number of rows for each column has [4, 2, 2, 4] from the bottom. Accordingly, the corresponding table has [3, 3, 4, 4, 4, 2, 2, 4].

According to the table information, table information items of three tables have different values, and thus an image scanning apparatus may recognize that the tables have different types. For example, the table of FIG. 12 is contained in a currently scanned document and the table of FIG. 13 is a pre-stored table, and when whether the tables of FIGS. 12 and 13 are similar is determined via comparison, the classifier 160 may calculate differences (0, 0, 0, 0, 0, 0, 0, 3) between items of table information of FIG. 12 and times of table information of FIG. 13 and calculate the sum (3) of the differences. The classifier 160 may different that the table of FIG. 12 and the table of FIG. 13 are different using the fact that the calculated value is not 0. Thus far, although the classifier 160 determines that the tables are different based on the fact that differences are not 0 has been described, in some embodiments, the aforementioned comparison operation may be performed on each of a plurality of table information items stored in a storage, and when there is no table information with a value difference of 0, the classifier 160 may classify a corresponding document as a document type corresponding pre-stored table information with a lowest difference value.

In addition, table information is generated using a table type, and thus table information items 1550 and 1560 constituting table information may be rapidly generated. The table information items 1550 and 1560 may be extracted with respect to a gap between boundaries but alternatively, may be extracted in units of predetermined intervals. The table information may be set as metadata and used for a search function during database storage.

In an embodiment of the present invention, although the case in which the number of columns for each row and the number of rows for each column are used as table information has been described, in some embodiments, length information for a specific column or all columns may be used as table information. In this case, the length information may reflect a weight to a length that exceeds a predetermined value.

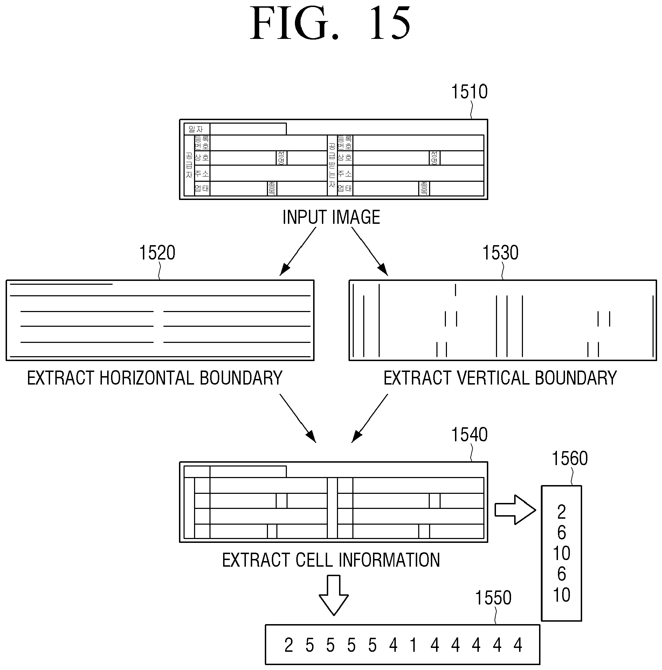

Hereinafter, a procedure for generating cell information for generating the aforementioned table information will be described with reference to FIG. 15.

Referring to FIGS. 11 and 15, a table is expressed by horizontal and vertical lines. Accordingly, when a document 1100 contains a table 1110, the table 1110 (image 1510) includes a plurality of horizontal lines and a plurality of vertical lines. Accordingly, the classifier 160 primarily extracts a horizontal boundary 1520 and a vertical boundary 1530 from a document. In addition, a correlation between the two extracted horizontal boundary and vertical boundary may be extracted to generate cell information 1540 through the correlation.

When the cell information 1540 is generated, table information for a table may be extracted as described above.

FIG. 16 is a diagram for explanation of a method for classifying colors according to an embodiment of the present invention.

Referring to FIG. 16, the classifier 160 performs quantization 1620 on colors contained in a document 1610. Here, the quantization refers to extraction of all colors contained in a document or extraction of all colors and extraction of the number of color values.

When the quantization is performed, the classifier 160 may compare a color map 1630 corresponding to a pre-classified keyword or a document type with a color map of a current document to find a keyword or document type 1640 similar to the current color map 1611.

For example, a public office may use various forms with different colors, use a copy request with red coloring, and use a birth report with blue coloring. In this case, the classifier 160 may extract a color map from a scanned image via quantization, and when the extracted color map is mainly colored with blue, the classifier 160 may classify a currently scanned image as a birth report. On the other hand, when the extracted color map is mainly colored with red, the classifier 160 may classify a currently scanned image as a copy request.

In addition, a public office for managing a land registration map needs to classify a map of a mountainous area and a map of a seaboard. In this case, the classifier 160 may also extract a color map from the scanned map via quantization, and when the extracted color map is mainly colored with green, the currently scanned map may be classified as a map of a mountainous area. On the other hand, when the extracted color map is mainly colored with blue, the currently scanned map may be classified as a map of a seaboard.

In addition, a public office or a company may illustrate a special log in a document. As necessary, the log may be colorful, and in this case, the classifier 160 may extract a color map from a scan image of the document with the illustrated log and compare a pre-stored log color map for each company and the extracted color map to determine a company that owns the corresponding document via classification.

FIG. 17 is a diagram for explanation of a method for classifying a stamp according to an embodiment of the present invention.

In detail, a stamp image is formed by putting a stamp on a document with a text. Accordingly, text color and stamp image color are different. Accordingly, in order to extract a stamp based on the color difference, a plurality of chroma items (e.g., Cr 1730 and Cb 1720) is extracted from a scan image 1710 with respect to a document with an illustrated stamp, as illustrated in FIG. 17.

In addition, boundary areas are extracted with respect to the extracted chroma items (1740 and 1750). In addition, the plurality of extracted boundary areas may be merged to extract a stamp shape (1760).

When the stamp shape is extracted, the classifier 160 may perform classification based on similarity between pre-stored stamp shape information and an extracted stamp shape.

In some embodiments, the classifier 160 may perform OCR on a region detected with a stamp and perform classification using both the OCR result and the stamp shape. An example of the stamp may include a date stamp. In this case, the classifier 160 may recognize a position of the stamp through the aforementioned process and recognize a date via OCR. Upon recognizing a date, the classifier 160 may classify a scan image based on the recognized date. In addition, an example of the stamp may include an approval or rejection stamp. In this case, the classifier 160 may recognize a position of a stamp through the aforementioned process and recognize whether the corresponding stamp is approval or rejection via OCR. When a stamp type is classified, the classifier 160 may classify a scan image according to the classification result.

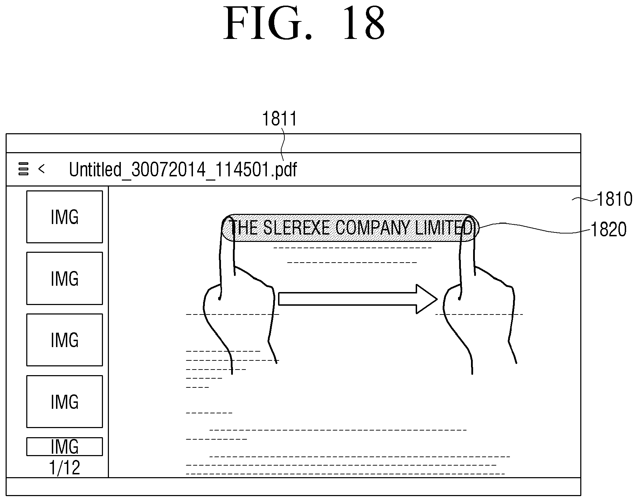

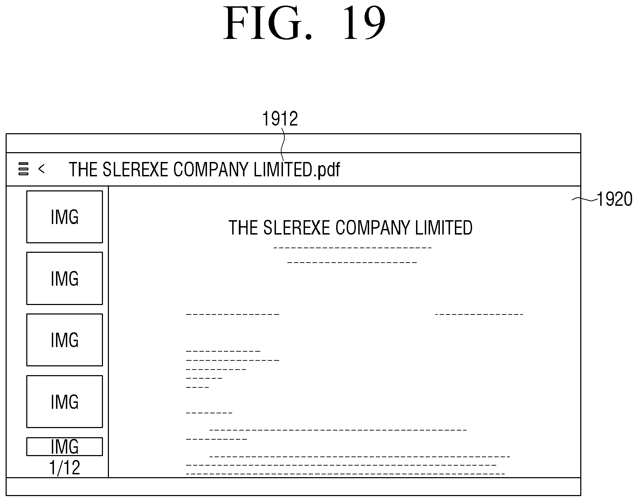

FIGS. 18 and 19 are diagrams for explanation of a method for setting a name of a generated image file.

Upon storing a scan result for a scan operation as a file, the image scanning apparatus 100 generates a file name 1811 for an image file generated based on information such as a user who inputs a scan command and a time taken to perform a scan operation. When a file name is generated as information that is easily checked by the image scanning apparatus 100, a user needs to remember a time point for generation of a specific document in order to find a specific document in the future. Otherwise, there is inconvenience of previewing an image file one by one in order to find a specific image file.

In order to reduce the inconvenience, keyword/title and so on for identifying a corresponding document may be inserted as a tag into a scan result or a corresponding keyword/title may be inserted as a file name.

However, conventionally, for setting of the tag or the file name, specific keyword/title needs to be inserted as a command corresponding to a tag name or a file name one by one in a command window. However, much effort is required for an operation for inputting a keyword/title for easily identifying a specific image file by a user in the future in that there is no keyboard such as a PC.

Accordingly, in an embodiment, as illustrated in FIG. 18, a representative thumbnail image 1810 is displayed in a corresponding image file at a time point for generating one image file.

In addition, when a user touches a region 1820 in which a text to be input as a tag or a file name on the displayed thumbnail image 1810, the image scanning apparatus 100 may perform OCR on the region touched by the user and apply the OCR result as a tag to the file or apply the OCR result to a file name 1912 of the document 1920 as illustrated in FIG. 19.

Although the case in which only one region is selected by a user has been described thus far, in some embodiments, a plurality of regions may be selected by the user, keyword/sentence corresponding to each of the plurality of regions may be recorded as a tag, and one of a plurality of keywords/sentences may be automatically reflected to a file name or may be reflected to the file name according to user selection.

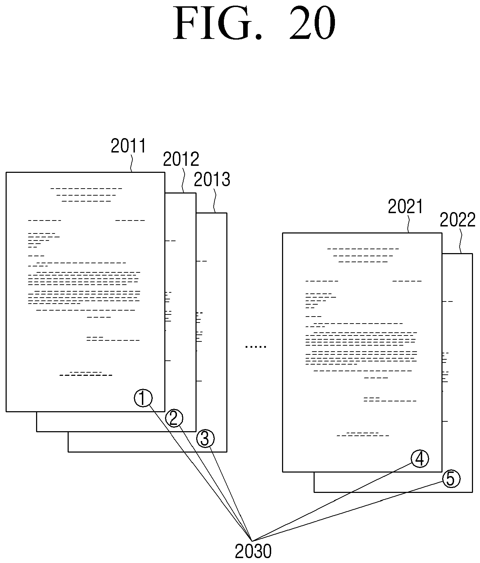

FIG. 20 is a diagram for explanation of a method for aligning generated image files.

When a scan operation is performed on a document, pages may be frequently out of order. In this case, in the case of a conventionally generated image file, pages are out of order. In addition, when the file is printed, the printed result pages may be out of order.

Accordingly, in an embodiment, when a plurality of documents 2011, 2012, 2013, 2021, and 2022 are scanned, an identifier 2030 indicating a page number in each document may be detected, generated scan images may be aligned according to an order of the detected identifier, and an image file may be generated according to an alignment order. In the illustrated example, although a page number is expressed by an Arab numeral, in some embodiments, the page number may be expressed by other identifiers such as Roman alphabet. In addition, in the illustrated example, although an identifier is disposed in a center of a lower portion or a right side of the lower portion of a page, in some embodiments, an identifier may be disposed at a different position such as an upper end of the page. However, in general, an identifier indicating a page is disposed in an upper end or a lower end of a document, and thus in some embodiments, in order to rapidly recognize an identifier, OCR may be performed on an upper end and/or lower end of the document to recognize the identifier. In addition, when an identifier is recognized with respect to a central region of a lower end of a first page, since identifiers of pages are generally disposed at the same position with respect to the same document, OCR may be performed only on the same position after a second page to rapidly recognize an identifier.

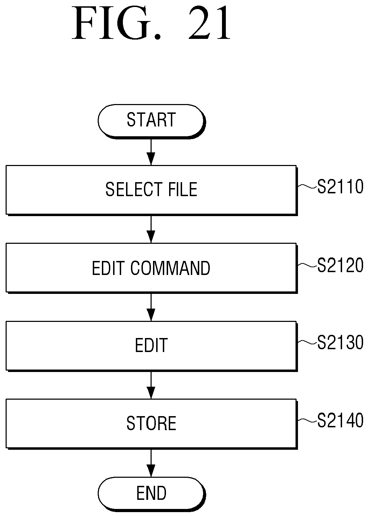

FIG. 21 is a diagram for explanation of a control method according to an embodiment of the present invention.

Referring to FIG. 21, first, a pre-stored image file is selected (operation S2110). In detail, on a monitor for displaying a list of pre-stored image files, one image file may be selected via a touch method.

In addition, an edit command for a pre-selected image file is input (operation S2120). The edit command may be a merging command with another image file, a partition command into two image files, a delete command of a specific page, or a changing command of page order. A touch gesture for each command has been described and thus a repeated detailed description thereof is omitted.

The selected image file is edited according to the input edit command (operation S2130). In detail, in response to a touch gesture input from a user, edit of deleting a predetermined page from the selected image file may be performed, editing of partitioning the selected image file into two image files may be performed, or a merging operation with another image file may be performed.

The edited image file is stored (operation S2140). For example, when the user gesture is a merging command, an image file with another added document may be updated according to the merging result and the merged image file may be deleted from a storage.

As described above, in the control method according to an embodiment of the present invention, an image scanning apparatus autonomously provides edit of an image file, thereby enhancing user convenience. In addition, the edit of the image file is performed according to the touch gesture, and thus the user may more intuitively perform edit a document. The control method of FIG. 21 may be executed by an image scanning apparatus including the components of FIG. 1 or may also be executed by an image scanning apparatus including other components.

In addition, the aforementioned control method may be embodied as a program including an algorithm executable in a computer, and the program may be stored and provided in a non-transitory computer readable medium.

The non-transitory computer readable medium is a medium that semi-permanently stores data and from which data is readable by a device, but not a medium that stores data for a short time, such as register, a cache, a memory, and the like. In detail, the aforementioned various applications or programs may be stored in the non-transitory computer readable medium, for example, a compact disc (CD), a digital versatile disc (DVD), a hard disc, a bluray disc, a universal serial bus (USB), a memory card, a read only memory (ROM), and the like, and may be provided.

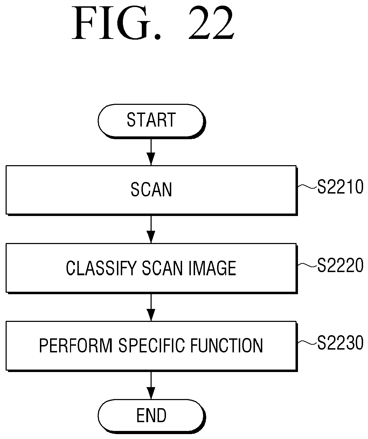

FIG. 22 is a diagram for explanation of a control method according to an embodiment of the present invention.

Referring to FIG. 22, a document is scanned (operation S2210). In detail, the document is canned to generate a scan image. In an embodiment, the case in which the document is scanned to generate a scan image has been described, in some embodiments, a pre-stored scan image or a pre-stored image file may be used in a classification operation that will be described later. In addition, the embodiment may also be applied to a fax image generated via a fax reception operation as well as a scan image.

The scan image is classified (operation S2220). In detail, OCR may be performed on an entire region of the scan image and the document may be classified according to a predetermined keyword as the OCR result. Alternatively, the scan image may be classified according to a type of a table contained in the scan image. Alternatively, the scan image may be classified according to a color map contained in the scan image. Alternatively, the scan image may be classified according to a shape of a stamp contained in the scan image. The classification method according to each manner has been described in detail with reference to FIGS. 11 to 17, and a repeated description is omitted here.

A specific function may be performed according to the classification result (operation S2230). In detail, according to the classification result, processing such as scan image storage, scan image transmission, and scan image print may be performed. The aforementioned storage processing and transmission processing may be performed by storing or transmitting data to various storages according to the classification result.

The aforementioned control method according to an embodiment may classify a document in various methods and perform other various operations according to the classification result, thereby enhancing user convenience. For the classification, a user may determine a document type as a target of document classification without setting the type of the document by a user, thereby further enhancing user convenience. The control method of FIG. 22 may be executed by an image scanning apparatus including the components of FIG. 1 or may also be executed by an image scanning apparatus including other components.

In addition, the aforementioned control method may be embodied as a program including an algorithm executable in a computer, and the program may be stored and provided in a non-transitory computer readable medium.

Although the case in which the classification operation of FIG. 22 is performed to be differentiated from the edit operation of FIG. 21 has been described, in some embodiments, the edit operation of FIG. 21 may be applied to the scan image or image file generated via the classification operation of FIG. 22.

Embodiments of the present invention have been described with particular reference to the examples illustrated. However, it will be appreciated that variations and modifications may be made to the examples described within the scope of the appending claims.

## Claims

1. An image scanning apparatus comprising:
a scanner configured to scan a document to generate an image file including a plurality of pages;
a storage configured to store an image file including the generated image file;
a user interface unit configured to receive a selection of the stored image file and one or more edit commands and to display a plurality of thumbnail images corresponding, respectively, to the plurality of pages in the selected image file;
a controller, in response to any one of the displayed plurality of thumbnail images being selected for at least a predetermined time period, configured to edit the selected image file based on the one or more edit command; **characterized by** further comprising
a classifier configured to recognize a text contained in an area of the generated scan image and classify the scan image according to whether a predetermined keyword is present in the recognized text;
wherein the classifier is configured to determine a degree of importance of each page of the plurality of pages together based on a keyword included in the specified page and the user interface unit is configured to display a degree of importance of each page of the plurality of pages together with the displayed plurality of thumbnail images.

2. The image scanning apparatus as claimed in claim 1, wherein the controller, in response to the any one of the displayed plurality of thumbnail images being selected for at least the predetermined time period, is configured to delete the page respectively corresponding to the any one of the displayed plurality of thumbnail images being selected for at least the predetermined time period from the selected image file.

3. The image scanning apparatus as claimed in claim 1 or 2, wherein the controller, in response to the any one of the displayed plurality of thumbnail images being selected for at least the predetermined time period, is configured to partition the selected image file into separate image files based on the page respectively corresponding to the any one of the displayed plurality of thumbnail images being selected for at least the predetermined time period.

4. The image scanning apparatus as claimed in any preceding claim, wherein the controller, in response to a command to move the any one of the displayed plurality of thumbnail images to a different position, is configured to change the order of the page corresponding to the moved thumbnail image in the selected image file.

5. The image scanning apparatus as claimed in any preceding claim, wherein the controller, in response to a command to place a first thumbnail image of the displayed plurality of thumbnail images on a second thumbnail image of the plurality of thumbnail images, is configured to control the user interface unit to display the first thumbnail image adjacent to the second thumbnail image in one region.

6. The image scanning apparatus as claimed in claim 5, wherein the controller, in response to a print command for the selected image file, is configured to apply an n-up print option to pages corresponding to the first thumbnail image and the second thumbnail image and perform a print operation on the pages.

7. The image scanning apparatus as claimed in any preceding claim, wherein:
the user interface is configured to receive a merging command for a first image file and a second image file; and
the controller is configured to merge the first image file and the second image file into one image file and store the one image file in the storage.

8. The image scanning apparatus as claimed in claim 7, wherein:
the user interface is configured to display a plurality of icons corresponding to a plurality of image files stored in the storage; and
the controller, when a second icon of the plurality of icons is placed on a first icon, is configured to append a second image file corresponding to the second icon to a first image file corresponding to the first icon and delete the second image file.

9. The image scanning apparatus as claimed in any preceding claim,
wherein the scanner is configured to scan a document, including a table, to generate a scan image including the table; whe
rein the classifier is configured to classify the generated scan image for further processing; wherein the controller is configured to process the classified scan image using at least one of storage processing, transmission processing, and print processing, according to the classification result;
wherein the classifier is further configured to extract table information including a number of columns for each row of the table included in the generated scan image and a number of rows for each column, and classify the generated scan image based on the extracted table information.

10. The image scanning apparatus as claimed in claim 9, wherein the classifier is configured to extract a horizontal boundary region and a vertical boundary region from the generated scan image, extract cell information based on the extracted horizontal boundary region and vertical boundary region, and extract the number of columns for each row and the number of rows for each column using the extracted cell information.

11. The image scanning apparatus as claimed in claim 9 or 10, wherein the classifier is configured to classify the scan image according to a color map of a color image contained in the document, is configured to recognize text contained in a region of the generated scan image and classify the scan image according to whether a predetermined keyword is present in the recognized text, or is configured to extract a stamp from the generated scan image and classify the generated scan image according to the extracted stamp.

12. The image scanning apparatus as claimed in any of claims 9 to 11, wherein the user interface unit is configured to receive a selection of an Optical Character Recognition (OCR) performing region for the generated scan image,
wherein the controller is configured to recognize a character with respect to the selected OCR performing region of the generated scan image, and copy the recognized character to at least one of a file name and a tag region of the generated scan image.

13. A method for controlling an image scanning apparatus, the method comprising:
storing a generated image file representing a scanned document including a plurality of pages; displaying, on the image scanning apparatus, in response to a received selection of the image file, a plurality of thumbnail images corresponding, respectively, to the plurality of pages included in the selected image file;
editing, in response to any one of the displayed plurality of thumbnail images being selected for at least a predetermined time period, the selected image file, using the image scanning apparatus, based on one or more user input edit command; and
storing the edited image file;
**characterized by**
recognising a text contained in an area of the generated scan image;
classifying the scan image according to whether a predetermined keyword is present in the recognized text;
determining a degree of importance of each page of the plurality of pages together based on a keyword included in the specified page; and
displaying, on the image scanning apparatus, a degree of importance of each page of the plurality of pages together with the displayed of thumbnail images.

14. The method as claimed in claim 13, further comprising:
scanning a document, including a table, to generate a scan image including the table; classifying the scan image for further processing;
processing the classified scan image, using at least one of storage processing, transmission processing, and print processing,
wherein the classifying comprises extracting table information including a number of columns for each row of the table included in the generated scan image and a number of rows for each column, and classifying the generated scan image based on the extracted table information.

## Patentansprüche

1. Bildabtastvorrichtung, die Folgendes umfasst:
einen Scanner, der dazu konfiguriert ist, ein Dokument abzutasten, um eine Bilddatei mit mehreren Seiten zu erzeugen;
einen Speicher, der dazu konfiguriert ist, eine Bilddatei einschließlich der erzeugten Bilddatei zu speichern;
eine Benutzerschnittstelleneinheit, die dazu konfiguriert ist, eine Auswahl der gespeicherten Bilddatei und einen oder mehrere Bearbeitungsbefehle zu empfangen und mehrere Miniaturbilder anzuzeigen, die jeweils den mehreren Seiten in der ausgewählten Bilddatei entsprechen;
einen Controller, der als Reaktion darauf, dass eines der angezeigten mehreren Miniaturbilder für mindestens einen vorbestimmten Zeitraum ausgewählt wird, dazu konfiguriert ist, die ausgewählte Bilddatei basierend auf dem einen oder den mehreren Bearbeitungsbefehl(en) zu bearbeiten;
**dadurch gekennzeichnet, dass** sie ferner Folgendes umfasst:
einen Klassifizierer, der dazu konfiguriert ist, einen in einem Bereich des erzeugten Abtastbildes enthaltenen Text zu erkennen und das Abtastbild danach zu klassifizieren, ob ein vorbestimmtes Schlüsselwort in dem erkannten Text vorhanden ist;
wobei der Klassifizierer dazu konfiguriert ist, einen Wichtigkeitsgrad jeder Seite der mehreren Seiten zusammen basierend auf einem Schlüsselwort zu bestimmen, das in der angegebenen Seite enthalten ist, und die Benutzerschnittstelleneinheit dazu konfiguriert ist, einen Wichtigkeitsgrad jeder Seite der mehreren Seiten zusammen mit den mehreren angezeigten Miniaturbildern anzuzeigen.

2. Bildabtastvorrichtung nach Anspruch 1, wobei der Controller als Reaktion darauf, dass eines der angezeigten mehreren Miniaturbilder für mindestens den vorbestimmten Zeitraum ausgewählt wird, dazu konfiguriert ist, die Seite, die jeweils dem einen der angezeigten mehreren Miniaturbilder entspricht, das mindestens für den vorbestimmten Zeitraum ausgewählt wird, aus der ausgewählten Bilddatei zu löschen.

3. Bildabtastvorrichtung nach Anspruch 1 oder 2, wobei der Controller als Reaktion darauf, dass eines der angezeigten mehreren Miniaturbilder für mindestens den vorbestimmten Zeitraum ausgewählt wird, dazu konfiguriert ist, die ausgewählte Bilddatei basierend auf der Seite, die jeweils dem einen der angezeigten mehreren Miniaturbilder entspricht, das für mindestens den vorbestimmten Zeitraum ausgewählt wird, in separate Bilddateien zu partitionieren.

4. Bildabtastvorrichtung nach einem der vorhergehenden Ansprüche, wobei der Controller als Reaktion auf einen Befehl, das eine der angezeigten mehreren Miniaturbilder an eine andere Position zu bewegen, dazu konfiguriert ist, die Reihenfolge der Seite, die dem bewegten Miniaturbild entspricht, in der ausgewählten Bilddatei zu ändern.

5. Bildabtastvorrichtung nach einem der vorhergehenden Ansprüche, wobei der Controller als Reaktion auf einen Befehl, ein erstes Miniaturbild der angezeigten mehreren Miniaturbilder auf einem zweiten Miniaturbild der mehreren Miniaturbilder zu platzieren, dazu konfiguriert ist, die Benutzerschnittstelleneinheit so zu steuern, dass sie das erste Miniaturbild neben dem zweiten Miniaturbild in einem Bereich anzeigt.

6. Bildabtastvorrichtung nach Anspruch 5, wobei der Controller als Reaktion auf einen Druckbefehl für die ausgewählte Bilddatei dazu konfiguriert ist, eine n-Nutzen-Druckoption auf Seiten anzuwenden, die dem ersten Miniaturbild und dem zweiten Miniaturbild entsprechen, und einen Druckvorgang an den Seiten durchzuführen.

7. Bildabtastvorrichtung nach einem der vorhergehenden Ansprüche, wobei:
die Benutzerschnittstelle dazu konfiguriert ist, einen Zusammenführungsbefehl für eine erste Bilddatei und eine zweite Bilddatei zu empfangen; und
der Controller dazu konfiguriert ist, die erste Bilddatei und die zweite Bilddatei zu einer Bilddatei zusammenzuführen und die eine Bilddatei im Speicher zu speichern.

8. Bildabtastvorrichtung nach Anspruch 7, wobei:
die Benutzerschnittstelle dazu konfiguriert ist, mehrere Symbole anzuzeigen, die mehreren im Speicher gespeicherten Bilddateien entsprechen; und
wenn ein zweites Symbol der mehreren Symbole auf einem ersten Symbol platziert wird, der Controller dazu konfiguriert ist, eine zweite Bilddatei, die dem zweiten Symbol entspricht, an eine erste Bilddatei, die dem ersten Symbol entspricht, anzuhängen und die zweite Bilddatei zu löschen.

9. Bildabtastvorrichtung nach einem der vorhergehenden Ansprüche,
wobei der Scanner dazu konfiguriert ist, ein Dokument einschließlich einer Tabelle abzutasten, um ein Abtastbild einschließlich der Tabelle zu erzeugen;
wobei der Klassifizierer dazu konfiguriert ist, das erzeugte Abtastbild zur weiteren Verarbeitung zu klassifizieren;
wobei der Controller dazu konfiguriert ist, das klassifizierte Abtastbild unter Verwendung einer Speicherverarbeitung, einer Übertragungsverarbeitung und/oder einer Druckverarbeitung gemäß dem Klassifizierungsergebnis zu verarbeiten;
wobei der Klassifizierer ferner dazu konfiguriert ist, Tabelleninformationen einschließlich einer Anzahl von Spalten für jede Zeile der Tabelle, die in dem erzeugten Abtastbild enthalten ist, und einer Anzahl von Zeilen für jede Spalte zu extrahieren und das erzeugte Abtastbild basierend auf den extrahierten Tabelleninformationen zu klassifizieren.

10. Bildabtastvorrichtung nach Anspruch 9, wobei der Klassifizierer dazu konfiguriert ist, einen horizontalen Grenzbereich und einen vertikalen Grenzbereich aus dem erzeugten Abtastbild zu extrahieren, Zelleninformationen basierend auf dem extrahierten horizontalen Grenzbereich und dem vertikalen Grenzbereich zu extrahieren und die Anzahl der Spalten für jede Zeile und die Anzahl der Zeilen für jede Spalte unter Verwendung der extrahierten Zelleninformationen zu extrahieren.

11. Bildabtastvorrichtung nach Anspruch 9 oder 10, wobei der Klassifizierer dazu konfiguriert ist, das Abtastbild gemäß einer Farbkarte eines in dem Dokument enthaltenen Farbbildes zu klassifizieren, dazu konfiguriert ist, Text zu erkennen, der in einem Bereich des erzeugten Abtastbildes enthalten ist und das Abtastbild danach zu klassifizieren, ob ein vorbestimmtes Schlüsselwort in dem erkannten Text vorhanden ist, oder dazu konfiguriert ist, einen Stempel aus dem erzeugten Abtastbild zu extrahieren und das erzeugte Abtastbild gemäß dem extrahierten Stempel zu klassifizieren.

12. Bildabtastvorrichtung nach einem der Ansprüche 9 bis 11, wobei die Benutzerschnittstelleneinheit dazu konfiguriert ist, eine Auswahl eines optischen Zeichenerkennungs*(Optical Character Recognition* - OCR)-Ausführungsbereichs für das erzeugte Abtastbild zu empfangen,
wobei der Controller dazu konfiguriert ist, ein Zeichen in Bezug auf den ausgewählten OCR-Ausführungsbereich des erzeugten Abtastbildes zu erkennen und das erkannte Zeichen in einen Dateinamen und/oder einen Tag-Bereich des erzeugten Abtastbildes zu kopieren.

13. Verfahren zur Regelung einer Bildabtastvorrichtung, wobei das Verfahren Folgendes umfasst:
Speichern einer erzeugten Bilddatei, die ein abgetastetes Dokument mit mehreren Seiten darstellt;
Anzeigen, auf der Bildabtastvorrichtung als Antwort auf eine empfangene Auswahl der Bilddatei, mehrerer Miniaturbilder, die jeweils den mehreren Seiten entsprechen, die in der ausgewählten Bilddatei enthalten sind;
Bearbeiten der ausgewählten Bilddatei als Reaktion darauf, dass eines der angezeigten mehreren Miniaturbilder für mindestens einen vorbestimmten Zeitraum ausgewählt wird, unter Verwendung der Bildabtastvorrichtung basierend auf einem oder mehreren Benutzereingabe-Bearbeitungsbefehl(en); und
Speichern der bearbeiteten Bilddatei;
**gekennzeichnet durch**
Erkennen eines Textes, der in einem Bereich des erzeugten Abtastbildes enthalten ist;
Klassifizieren des Abtastbildes danach, ob ein vorbestimmtes Schlüsselwort im erkannten Text vorhanden ist;
Bestimmen eines Wichtigkeitsgrades jeder Seite der mehreren Seiten zusammen basierend auf einem Schlüsselwort, das in der angegebenen Seite enthalten ist; und
Anzeigen eines Wichtigkeitsgrades jeder Seite der mehreren Seiten zusammen mit den angezeigten Miniaturbildern auf der Bildabtastvorrichtung.

14. Verfahren nach Anspruch 13, ferner umfassend:
Abtasten eines Dokuments, einschließlich einer Tabelle, um ein Abtastbild einschließlich der Tabelle zu erzeugen;
Klassifizieren des Abtastbildes zur weiteren Verarbeitung;
Verarbeiten des klassifizierten Abtastbildes unter Verwendung einer Speicherverarbeitung, einer Übertragungsverarbeitung und/oder einer Druckverarbeitung,
wobei das Klassifizieren das Extrahieren von Tabelleninformationen einschließlich einer Anzahl von Spalten für jede Zeile der Tabelle, die in dem erzeugten Abtastbild enthalten ist, und einer Anzahl von Zeilen für jede Spalte und Klassifizieren des erzeugten Abtastbildes basierend auf den extrahierten Tabelleninformationen umfasst.

## Revendications

1. Appareil de balayage d'images comprenant :
un scanner configuré pour balayer un document afin de générer un fichier d'image comportant une pluralité de pages ;
un stockage configuré pour stocker un fichier d'image comportant le fichier d'image généré ;
une unité d'interface utilisateur configurée pour recevoir une sélection du fichier d'image stocké et une ou plusieurs commandes d'édition et pour afficher une pluralité de vignettes correspondant, respectivement, à la pluralité de pages dans le fichier d'image sélectionné ;
un dispositif de commande, en réponse à l'une quelconque de la pluralité de vignettes affichée étant sélectionnée pendant au moins une période de temps prédéterminée, configuré pour éditer le fichier d'image sélectionné en fonction de la ou des commande(s) d'édition ; **caractérisé en ce qu'**il comprend en outre un classificateur configuré pour reconnaître un texte contenu dans une zone de l'image scannée générée et pour classer l'image scannée selon si un mot-clé prédéterminé est présent dans le texte reconnu ;
le classificateur étant configuré pour déterminer un degré d'importance de chaque page de la pluralité de pages ensemble en fonction d'un mot-clé inclus dans la page spécifiée et l'unité d'interface utilisateur étant configurée pour afficher un degré d'importance de chaque page de la pluralité de pages ensemble avec la pluralité de vignettes affichée.

2. Appareil de balayage d'image selon la revendication 1, le dispositif de commande, en réponse au fait que l'une quelconque de la pluralité de vignettes affichée est sélectionnée pendant au moins la période de temps prédéterminée, étant configuré pour supprimer la page correspondant respectivement à l'une quelconque de la pluralité de vignettes affichée étant sélectionnée pendant au moins la période de temps prédéterminée à partir du fichier d'image sélectionné.

3. Appareil de balayage d'image selon la revendication 1 ou 2, le dispositif de commande, en réponse à l'une quelconque de la pluralité de vignettes affichée étant sélectionné pendant au moins la période de temps prédéterminée, étant configuré pour partitionner le fichier d'image sélectionné en fichiers d'image séparés en fonction de la page correspondant respectivement à l'une quelconque de la pluralité de vignettes affichée étant sélectionnée pendant au moins la période de temps prédéterminée.

4. Appareil de balayage d'image selon l'une quelconque des revendications précédentes, le dispositif de commande, en réponse à une commande pour déplacer l'une quelconque de la pluralité de vignettes affichée vers une position différente, étant configuré pour changer l'ordre de la page correspondant à la vignette déplacée dans le fichier d'image sélectionné.

5. Appareil de balayage d'image selon l'une quelconque des revendications précédentes, le dispositif de commande, en réponse à une commande pour placer une première vignette de la pluralité de vignettes affichée sur une seconde vignette de la pluralité de vignettes, étant configuré pour commander l'unité d'interface utilisateur pour afficher la première vignette adjacente à la seconde vignette dans une région.

6. Appareil de balayage d'image selon la revendication 5, le dispositif de commande, en réponse à une commande d'impression pour le fichier d'image sélectionné, étant configuré pour appliquer une option d'impression n-up aux pages correspondant à la première vignette et à la seconde vignette et effectuer une opération d'impression sur les pages.

7. Appareil de balayage d'image selon l'une quelconque des revendications précédentes :
l'interface utilisateur étant configurée pour recevoir une commande de fusion pour un premier fichier d'image et un second fichier d'image ; et
le dispositif de commande étant configuré pour fusionner le premier fichier d'image et le second fichier d'image en un seul fichier d'image et stocker le fichier d'image dans le stockage.

8. Appareil de balayage d'image selon la revendication 7 :
l'interface utilisateur étant configurée pour afficher une pluralité d'icônes correspondant à une pluralité de fichiers d'image stockés dans le stockage ; et
le dispositif de commande, lorsqu'une seconde icône de la pluralité d'icônes est placée sur une première icône, étant configuré pour ajouter un second fichier d'image correspondant à la seconde icône à un premier fichier d'image correspondant à la première icône et supprimer le second fichier d'image.

9. Appareil de balayage d'image selon l'une quelconque des revendications précédentes, le scanner étant configuré pour balayer un document, comportant une table, pour générer une image scannée comportant la table ;
le classificateur étant configuré pour classifier l'image scannée générée pour un traitement ultérieur ;
le dispositif de commande étant configuré pour traiter l'image scannée classifiée à l'aide d'un traitement de stockage et/ou d'un traitement de transmission et/ou d'un traitement d'impression, selon le résultat de classification ;
le classificateur étant en outre configuré pour extraire des informations de table comportant un certain nombre de colonnes pour chaque ligne de la table incluse dans l'image scannée générée et un certain nombre de lignes pour chaque colonne, et classifier l'image scannée générée en fonction des informations de table extraites.

10. Appareil de balayage d'image selon la revendication 9, le classificateur étant configuré pour extraire une région de limite horizontale et une région de limite verticale de l'image scannée générée, pour extraire des informations de cellule en fonction de la région de limite horizontale et de la région de limite verticale extraites, et pour extraire le nombre de colonnes pour chaque ligne et le nombre de lignes pour chaque colonne à l'aide des informations de cellule extraites.

11. Appareil de balayage d'image selon la revendication 9 ou 10, le classificateur étant configuré pour classifier l'image numérisée selon une carte couleur d'une image de couleur contenue dans le document, étant configuré pour reconnaître le texte contenu dans une région de l'image scannée générée et classifier l'image scannée selon qu'un mot-clé prédéterminé est présent dans le texte reconnu, ou est configuré pour extraire un tampon de l'image scannée générée et classifier l'image scannée générée en fonction du tampon extrait.

12. Appareil de balayage d'image selon l'une quelconque des revendications 9 à 11, l'unité d'interface utilisateur étant configurée pour recevoir une sélection d'une région d'exécution de reconnaissance optique de caractères (OCR) pour l'image scannée générée, le dispositif de commande étant configuré pour reconnaître un caractère par rapport à la région d'exécution OCR sélectionnée de l'image scannée générée, et copier le caractère reconnu dans au moins l'un d'un nom de fichier et d'une région d'étiquette de l'image scannée générée.

13. Procédé de commande d'un appareil de balayage d'image, le procédé comprenant :
le stockage d'un fichier d'image généré représentant un document numérisé comportant une pluralité de pages ;
l'affichage, sur l'appareil de balayage d'image, en réponse à une sélection reçue du fichier d'image, d'une pluralité de vignettes correspondant, respectivement, à la pluralité de pages incluses dans le fichier d'image sélectionné ;
l'édition, en réponse à l'une quelconque de la pluralité de vignettes affichée étant sélectionnée pendant au moins une période de temps prédéterminée, le fichier d'image sélectionné, à l'aide de l'appareil de balayage d'image, en fonction d'une ou plusieurs commandes d'édition d'entrée d'utilisateur ; et
le stockage du fichier d'image édité ;
**caractérisé par**
la reconnaissance d'un texte contenu dans une zone de l'image scannée générée ;
la classification de l'image scannée selon si un mot-clé prédéterminé est présent dans le texte reconnu ;
la détermination d'un degré d'importance de chaque page de la pluralité de pages ensemble en fonction d'un mot-clé inclus dans la page spécifiée ; et
l'affichage, sur l'appareil de balayage d'image, d'un degré d'importance de chaque page de la pluralité de pages ensemble avec l'affichage des vignettes.

14. Procédé selon la revendication 13, comprenant en outre :
le balayage d'un document, comportant une table, pour générer une image numérisée comportant la table ;
la classification de l'image scannée pour un traitement ultérieur ;
le traitement de l'image scannée classifiée, à l'aide du traitement de stockage et/ou du traitement de transmission et/ou du traitement d'impression,
la classification comprenant l'extraction d'informations de table comportant un certain nombre de colonnes pour chaque ligne de la table incluse dans l'image scannée générée et un certain nombre de lignes pour chaque colonne et la classification de l'image scannée générée en fonction des informations de table extraites.
